(19) Europäisches Patentamt

European Patent Office

Office européen des brevets

(11) **EP 1 349 314 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
*H04L 12/24* (2006.01)    *H04L 12/26* (2006.01)

(21) Anmeldenummer: **02006865.6**

(22) Anmeldetag: **26.03.2002**

(54) **Verfahren zur Überwachung von Service-Level-Agreements**

Method for monitoring service level agreements

Méthode pour surveiller des accords de niveau de service

(84) Benannte Vertragsstaaten:
**AT BE CH CY DE DK ES FI FR GB GR IE IT LI LU MC NL PT SE TR**

(43) Veröffentlichungstag der Anmeldung:
**01.10.2003 Patentblatt 2003/40**

(73) Patentinhaber:
• **Siemens Schweiz AG**
**8047 Zürich (CH)**
Benannte Vertragsstaaten:
**AT BE CH CY DK ES FI GR IE LI LU MC NL PT TR**
• **SIEMENS AKTIENGESELLSCHAFT**
**80333 München (DE)**
Benannte Vertragsstaaten:
**DE FR GB IT SE**

(72) Erfinder:
• **Favre, Pascal**
**1867 Ollon (CH)**

• **Gysbertse, Wouter**
**4534 Flumenthal (CH)**

(74) Vertreter: **Kley, Hansjörg**
**Siemens AG**
**Patentabteilung**
**Postfach 22 16 34**
**80506 München (DE)**

(56) Entgegenhaltungen:
**WO-A-00/72183**      **WO-A-00/74314**
**WO-A-98/42102**

• **GRAHAM CHEN ET AL: "Integrated Management Solution Architecture" CONFERENCE PROCEEDINGS ARTICLE , XP010376685**

**Beschreibung**

Die vorliegende Erfindung betrifft ein Verfahren zur Überwachung von Service-Level-Agreements nach dem Oberbegriff des Patentanspruchs 1 sowie ein System nach Anspruch 11.

Service-Level-Agreements werden meist bezüglich Services und Netzwerk-Elementen von einem Betreiber gegenüber Kunden abgeschlossen. Die Grundlagen der Bearbeitung und Überwachung von Service-Level-Agreements (im folgenden mit SLA abgekürzt) sind beispielsweise dem SLA Management Handbook [1] des Telemanagement Forums zu entnehmen. Im folgenden wird zur Vermeidung von Unklarheiten dort wo erforderlich die englischsprachige Nomenklatur aus dem Dokument [1] benutzt. Dabei werden die Begriffe Network Trouble Ticket und Service Trouble Ticket einheitlich in englischer Sprache verwendet und unter dem Oberbegriff Ticket oder Trouble Ticket oder Problem Ticket zusammengefasst.

In WO 98/42102 A1 (CROSSKEYS SYSTEMS CORPORATION) ist für ein Datennetzwerk ein SLA-Überwachungsverfahren offenbart, bei dem mit einer Datenbasis unter Benutzung eines Objekt-Modells mit den SLA-bezogenen Daten zur Durchführung des Verfahrens folgende Schritte vorgesehen sind:

(a) Nachführung der Datenbasis mit den SLA-bezogenen Daten der Kunden;
(b) Empfang von Daten enthaltend Angaben über die Performance des zu überwachenden Netzwerkes;
(c) kontinuierlicher Vergleich mit den in der Datenbasis gespeicherten Daten aus den SLA;
(d) optionale Generierung eines Reports aus den vorgenannten Daten und des Vergleichs, der die Performance Levels für individuelle Kunden gegenüber den in den SLA eingegangenen Verpflichtungen enthält.

In WO 99/25085 (VISUAL NETWORKS) wird ein Verfahren und System vorgeschlagen, bei dem mittels sogenannter Proben zwischen zwei Endpunkten eines leitungsvermittelten Netzes die Network Performance gemessen wird, insbesondere mittels der Metriken "round-trip-delay" (RTD) und "data delivery ratio" (DDR). Auf diese Weise können individuelle Messdaten bezüglich der zu einem Endpunkt zugehörigen Verbindungswege gemessen werden.

SLA werden nicht nur bezüglich der sogenannten Performance sondern auch für andere Gegenstände (z.B. für einen Dienst oder eine Dienstleistung) mit Kunden abgeschlossen wie z.B.:

- Verfügbarkeit (Availability) eines Netzes oder Netzelementes;
- Service-Beauftragung (Service Provisioning).

Unter dem Begriff "Service-Beauftragung" wird z.B. die Schaltung einer Strecke oder eine konkrete Leistung subsummiert.

Gegenstand eines SLA ist in aller Regel eine Benachrichtigung (Notifikation) eines Kunden, wenn das betreffende SLA verletzt wurde. Mit dem Begriff "Kunde" ist nicht notwendigerweise ein Kunde eines Unternehmens gemeint, sondern auch eine Stelle, die auf die Einhaltung eines eingegangenen SLA's angewiesen ist. Die vorstehend genannten Lösungen aus dem Stand der Technik weisen den Nachteil auf, dass sie stets weitgehend technologieabhängig sind und stets nur einen Gegenstand beinhalten bezüglich dem ein SLA abgeschlossen wurde. Unter Gegenstand ist in diesem Kontext z.B. ein Dienst oder eine Dienstleistung zu verstehen; konkret geht es dabei z.B. um Fault Management, Performance Management oder um eine Dienste-Beauftragung. Dabei war, wie erwähnt, der Nachteil immanent, dass das Monitoring bezüglich der SLA's stets nur einen solchen Dienst oder eine solche Dienstleistung beinhaltete.

Der vorliegenden Erfindung liegt daher die Aufgabe zugrunde, ein Verfahren zur Überwachung von Service-Level-Agreements SLA anzugeben, das technologieunabhängig und einheitlich ist, so dass deren Anwendung auch nicht auf das Gebiet der Telekommunikation beschränkt bleibt.

Diese Aufgabe wird erfindungsgemäss durch das im Patentanspruch 1 angegebene Verfahren und das in Anspruch 11 angegebene System gelöst. Vorteilhafte Ausgestaltungen der Erfindung sind in weiteren Ansprüchen angegeben.

Durch die Generierung von Trouble Tickets aus einem beliebigen Ereignis und die selektive Kumulierung der Dauer des aktiven Zustandes eines Trouble Tickets können SLA's in sehr differenzierter Weise überwacht werden, wobei die vereinbarten SLA's sich über beliebige Dienste, Dienstleistungen und/oder zugehörige Netzelemente erstrekken können. Wesentlich ist, dass alle Ereignisse, das sind Ereignisse, die hinsichtlich eines SLA die Verfügbarkeit oder Qualität eines Dienstes oder einer Dienstleistung beeinflussen, entweder als Start- oder Stop-Ereignis betrachtet werden und mit Trouble Tickets überwacht werden. Das erfindungsgemässe Verfahren erlaubt, beispielsweise ein Verfügbarkeits-SLA (Availability-SLA) mit der Grenze "besser als 99%", ein Performance-SLA mit der Grenze "Verzögerung kleiner als 85 ms" und ein Provisioning-SLA mit der Grenze "Erstinbetriebnahme innerhalb 7 Tage nach Vertragsabschluss" in einem Verfahren einheitlich überwacht werden.

Dadurch, dass
im Verfahrensschritt D die Ereignisse technischen und nichttechnischen Ursprung haben,

ist keine Unterscheidung der Handhabung der SLA's bezüglich Gegenstand und Ursprung der Ereignisse erforderlich (Patentanspruch 2).

Dadurch gekennzeichnet, dass

im Verfahrensschritt D die Ereignisse vor der Generierung eines Trouble Tickets und dementsprechend auch die Trouble Tickets klassifiziert werden und dass im Verfahrensschritt C' die Kumulation der Dauer abhängig von der Zugehörigkeit zu einer Klasse vorgenommen wird,

können die SLA's aus Sicht eines Diensteanbieters so differenziert überwacht werden, dass "Negativbeiträge" die nicht durch den Diensteanbieter zu verantworten sind, zwar erkannt werden, ohne dass am Verfahren etwas geändert werden muss. Diese "Negativbeiträge" führen jedoch nicht zu einer "Bestrafung" des Diensteanbieters (Patentanspruch 3).

Dadurch, dass

dem Verfahrensschritt E nachfolgend ein im inaktiven Zustand befindliches Trouble Ticket durch ein Ereignis erneut in den aktiven Zustand überführt wird,

können in einem Lauf zu einem bestimmten Trouble Ticket Ausschlusszeiten oder Wartungsfenster vereinbart werden, ohne dass der Dienstanbieter für seine Leistung in einem Wartungsfenster nachträglich manuell eine Korrektur vornehmen muss. Dies ist deshalb vorteilhaft, weil Wartungsarbeiten meist mit eine massive Generierung von Ereignissen zur Folge haben, die in im betreffenden Zeitrahmen die Verfügbarkeit massiv beeinträchtigen, z.B. durch Abschalten einer Strecke (Patentanspruch 5).

Dadurch, dass

für die Überführung in einen inaktiven Zustand eines Trouble Tickets Daten aus einer Zuordnungstabelle und/oder aus der Datenbasis herangezogen werden;

erfährt das Verfahren keine Änderungen, wenn neue SLA'S oder eine neue Verknüpfung von Service- und gegenständlichen Objekten, wie z.B. zusätzliche Ports, eingeführt wird (Patentanspruch 7).

Ein Ausführungsbeispiel der Erfindung wird nachfolgend anhand der Zeichnungen näher erläutert. Dabei zeigen:

| | |
|---|---|
| Figur 1 | Übersichtsdarstellung für die Überwachung von SLA's; |
| Figuren 2a, 2b, 2c | an Ereignis-Konzept gekoppelte Trouble Tickets; |
| Figur 3 | Drei-Schichten-Konzept |
| Figur 4 | SLA-Überwachung mit zu zwei Klassen zugehörigen Trouble Tickets |

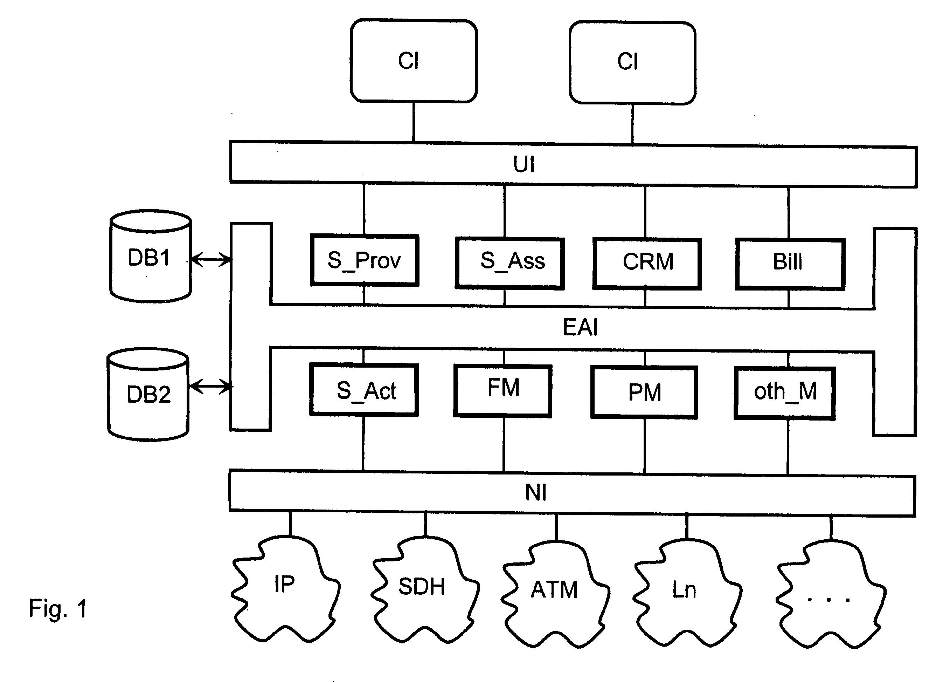

Figur 1 zeigt eine Übersicht der verschiedenen Komponenten für die Überwachung von SLA's. Aus den verschiedenen Netzen oder Netzelementen wie IP, SDH, usw. gemäss Figur 1 entstammen Ereignisse (in der Fachsprache Event), die in den Einheiten Service Activation S_Act, Fault Management FM und Performance Management PM einer ersten Bewertung und Klassifizierung unterzogen werden. Die SLA-Aufzeichnung und SLA-Verfolgung der Ereignisse erfolgt in einem sogenannten SLA-Monitoring. Gemäss Stand der Technik wurde dies je separat für Fault Management, Performance Management und Dienste-Beauftragung durchgeführt. Erfindungswesentlich ist nun ein übergreifender SLA-Monitoring Prozess vorgesehen, in dem zusammen mit der Einheit Service Assurance S_Ass die Gesamtheit der Dienste und Dienstleistung bezüglich eines oder mehrer SLA's aufgezeichnet, überwacht und mittels Notifikationen den Kunden mitgeteilt wird. Dieser gemeinsame SLA-Monitoring Prozess umfasst zusammen mit der Einheit S_Ass in dieser Ausführungsform die vorerwähnten Einheiten S-Act, FM und PM (wie in die Figur 1). Sollte ein oder mehrere SLA's verletzt worden sein, wird von der Stelle CRM eine proaktive Information über die Verletzung abgegeben. Parallel dazu kann der Verrechnungsstelle Bill gemeldet werden, dass die Verletzung der betreffenden SLA zu einer Entlastung führt.

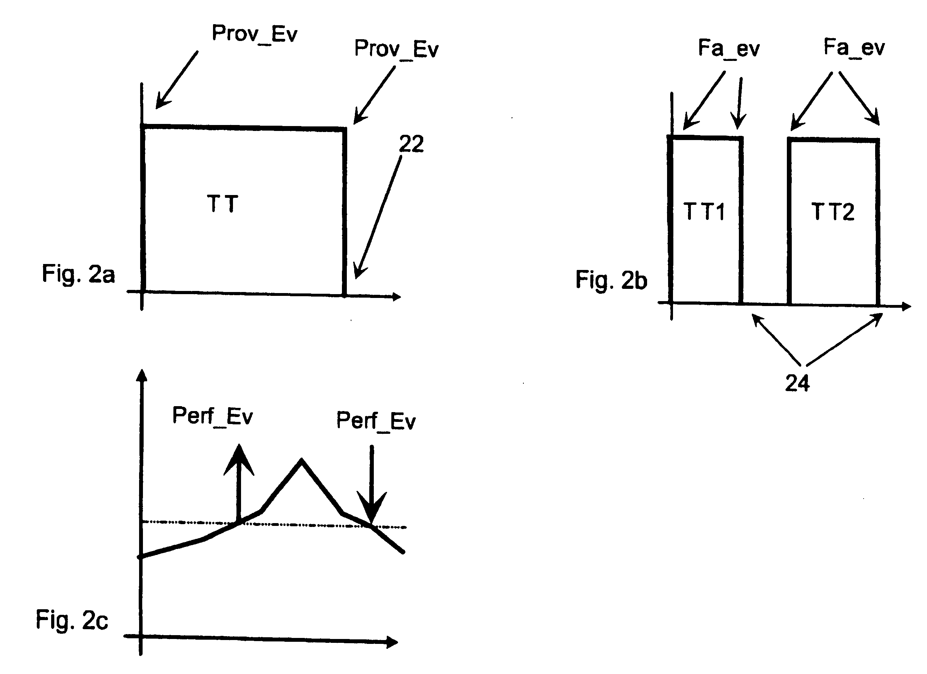

Für die Generierung (auch Kreation genannt) von Trouble Tickets wird auf die Figuren 2a bis 2c Bezug genommen. Ein Trouble Ticket TT (auch Problem Ticket genannt) wird stets aufgrund eines Ereignisses generiert. Ein Trouble Ticket TT beinhaltet die Beschreibung eines technischen Problems oder einer Störung oder die Aufnahme einer Störungsmeldung. Speziell im Fall von mittels Trouble Tickets TT erfassten Störungsmeldungen ist zu beachten, dass dabei nicht notwendigerweise auch ein technisches oder administratives Problem verbunden ist. In der Figur 2a ist die Generierung eines Trouble Tickets TT aufgrund eines Provisioning Events dargestellt, mit dem Bezugszeichen 22 ist der Abschluss mit "Installation ausgeführt" bezeichnet. Unter Provisioning ist irgend eine Dienstleistung bei einem Kunden zu verstehen, die entweder vor Ort oder auch abgesetzt erbracht werden kann. Diese Dienstleistung ist mit dem Begriff "Installation" entsprechend weit umfasst. In der Figur 2b ist die Kreation zweier verschiedener Trouble Tickets TT1 und TT2 dargestellt, die auf Fault Events zurückgehen. In den Figuren 2a und 2b hat die Ordinate keine metrische Bedeutung. In der Figur 2c ist die Quelle von Performance Events dargestellt, nämlich das Über-/Unterschreiten eines Performance Levels. Die graphische Darstellung steht z.B. für die Bit-Fehlerrate, in einer inversen Darstellung der Kurve könnte bei gleicher Bedeutung der angegebenen Events für die Kreation eines Trouble Tickets TT die Bandbreite einer Übertragungsstrecke als Beispiel genommen werden. Ein weiteres Beispiel eines Performance Events ist die prozentuale Verfügbarkeit von Ports an einer Vermittlungsstelle, diese Verfügbarkeit ist eine Funktion der Zeit. Gemeinsam an diesen Events ist, dass dadurch ein Trouble Ticket TT kreiert wird und im aktiven Zustand verbleibt, bis durch einen weiteren Event das betreffende Ticket TT in den inaktiven Zustand überführt wird. Wichtig ist für eine spätere Auswertung, dass die Trouble Tickets TT als solche nicht verschwinden, sondern nur noch ruhend oder inaktiv sind. In dieser Betrachtungsweise sind die Trouble Tickets TT1 und TT2 über die angegebene Zeit hinaus zwar existent, aber nicht in einem aktiven Zustand.

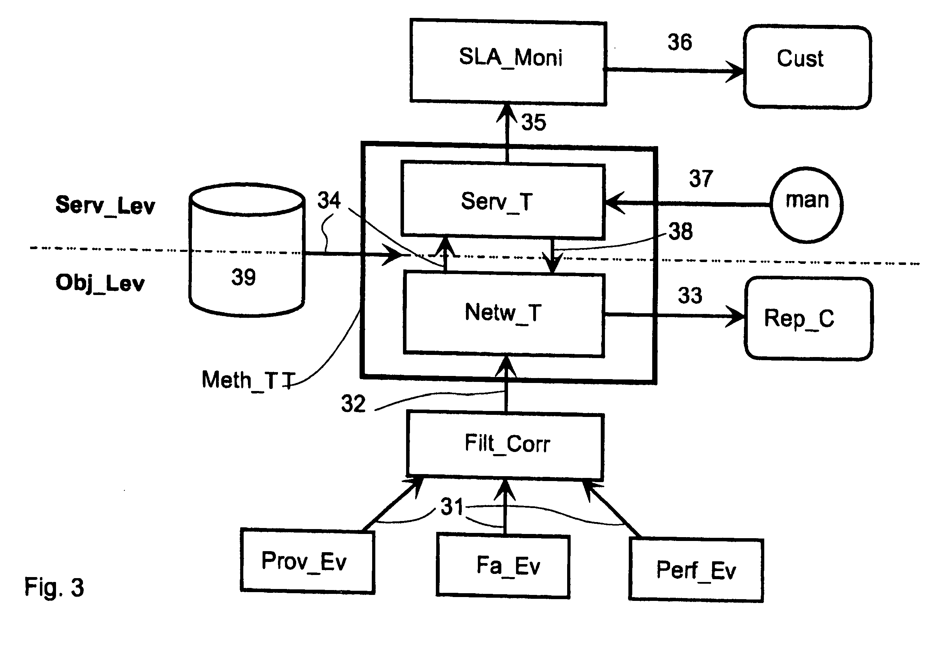

Die Architektur eines solchen gemeinsamen SLA-Monitoring Prozesses ist in Figur 3 mit einem Drei-Schichten-Konzept dargestellt. Die drei Schichten umfassen die Ereignis-Bearbeitung Filt_Corr (in der Fachsprache Event Processing genannt), das Trouble Ticketing Meth_TT und das SLA-Monitoring SLA_Moni. Dementsprechend sind in der Figur 3 die beiden Ebenen Service Level Serv_Lev und Object Level Obj_Lev durch eine Begrenzungslinie hervorgehoben. Die Ereignisse Perf_Ev, Fa_Ev und Prov_Ev, die den Einheiten Performance Management PM, Fault Management FM und Provisioning Management Prov_M gemäss der Figur 1 entstammen, werden durch eine Ereigniskollektion 31 über die Ereignisfilterung und Ereigniskorrelation Filt_Corr dem sogenannten Trouble Ticketing Meth_TT zugeführt. Aus diesen Ereignissen werden zusammen mit Hilfe einer Objekt- und Service-Zuordnungstabelle 39 die Service-bezogenen Trouble Tickets Serv_T generiert bzw. bereits generierte Trouble Tickets, insbesondere Network Tickets NetW_T werden durch die Ergebnisse aus der Ereignisfilterung und Ereigniskorrelation Filt_Corr in einen inaktiven Zustand überführt. Dieser Vorgang 32 führt zur Kreation von objektbezogenen Trouble Tickets (auch Problem Ticket genannt) Netw_T. In diesem Ausführungsbeispiel sind die objektbezogenen Tickets sogenannte Network Trouble Tickets, dies mit Bezug auch auf die Figur 1, in der die verschiedenen Netze und Netzelemente ATM, SDH, usw. dargestellt sind. Die Generierung der vorgenannten Service Trouble Tickets Serv_T erfolgt mit den Vorgängen 34 aus den Network Trouble Tickets Netw_T und aus der Objekt- und Service-Zuordnungstabelle 39. Die Service Trouble Tickets Serv_T können auch manuell durch eine Erfassung man von Kunden Reklamationen über den Vorgang 37 generiert werden. Aus einer Bewertung der Service Trouble Tickets Serv_T erfolgt über die Vorgänge 38 und 33 eine Generierung/Weiterleitung eines Reparaturauftrages an ein Reparatur-Zentrum Rep_C.

Die verschiedenen Sichten bezüglich der Priorisierung und der Priorität veranschaulicht die nachstehend aufgeführte Tabelle 1. Mit Core node" ist ein Netzwerkknoten bezeichnet, "Edge router" steht für einen Router bei einem Dienstanbieter, "Customer modem" steht für eine periphere Einrichtung beim "Endkunden". Mit "SLA usage" wird die (negative) relative Beanspruchung eines SLA's bezeichnet.

Tabelle 1: Sichten und zugehörige Prioritäten.

| Netz-Sicht | | Kunden-Sicht | | SLA-Sicht | |
|---|---|---|---|---|---|
| Prio | Problem | Prio | Problem | Prio | Problem |
| 1 | Core node | 3 | Operator X Core node | 2 | SLA usage: 50% Operator X Core node |
| 2 | Edge router | 2 | Provider Edge router | 1 | SLA usage: 95% Provider Edge router |
| 3 | Customer Modem | 1 | Bank Ltd Customer Modem | 3 | SLA usage: 2% Bank Ltd Customer Modem |

Der SLA-Monitoring Prozess im engeren Sinne überprüft über die Vorgänge 35 und 38 die Trouble Tickets gegen die SLA-Kriterien und erzeugt gegebenenfalls eine Notifikation zuhanden eines Kunden. An dieser Stelle sei darauf hingewiesen, dass ein solcher "Kunde" nicht notwendigerweise ein "Endkunde" ist, sondern eine Stelle in einem Dienstleistungsverbund mit umfassen kann.

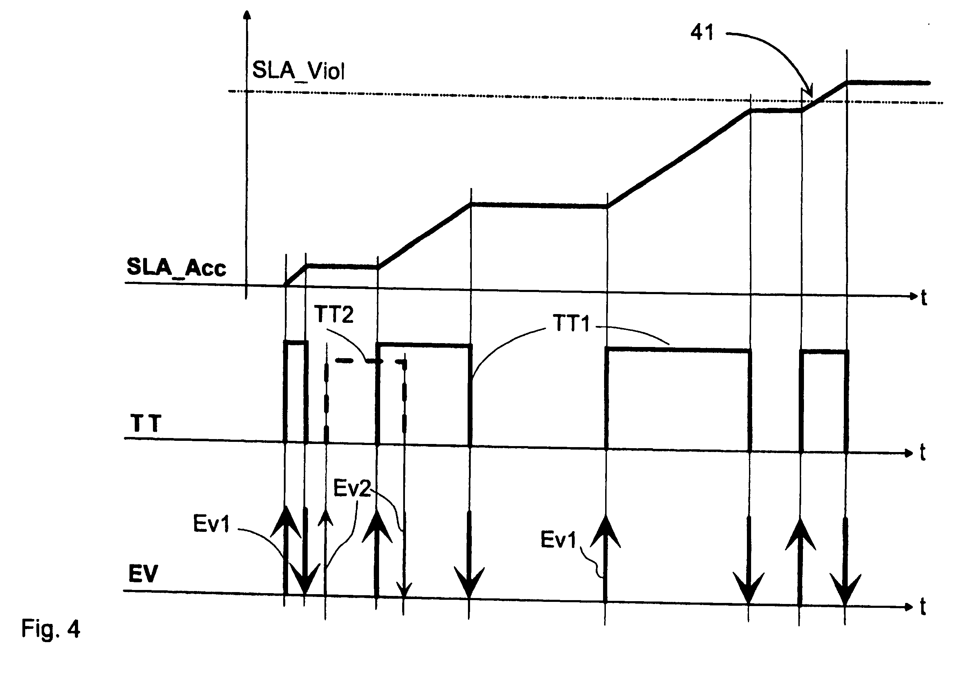

Die erfindungsgemässe Prüfung gegen die SLA-Kriterien wird anhand der Figur 4 erläutert. In der unteren Darstellung sind Ereignisse Ev1 und Ev2 dargestellt, die als solche bereits eine Klassifizierung gemäss den vorstehenden Angaben bezüglich der Einheit Filt_Corr in Figur 3 unterzogen wurden. Aus diesen Ereignissen werden entsprechende Network Trouble Tickets erstellt (angedeutet mit TT1 und TT2). Unter Berücksichtigung der Zuordnungstabelle werden nur für die Tickets TT1 zugehörige Service Trouble Tickets erstellt. Für die Tickets TT2 werden aufgrund der Zuordnungstabelle keine entsprechende Service Trouble Tickets erstellt.

Die Angabe von zwei Klassen ist hier nur beispielhaft. In einer weiteren Ausführungsform können zur Differenzierung mehr als zwei Klassen vorgesehen werden. Aufgrund dieser Ereignisse erfolgt gemäss der mittleren Darstellung von Figur 4 eine Generierung von Trouble Tickets TT1 und TT2. Die Indizierung 1 und 2 bezieht sich nur auf die Klassen und nicht auf die Trouble Tickets selber. Zu Ereignissen Ev2 der Klasse 2 werden ebenfalls Trouble Tickets generiert, die in der nachfolgenden Prüfung gegen die SLA-Kriterien nicht berücksichtigt werden, beispielsweise wenn Klasse 2 nicht mittels einem SLA verbunden ist, oder wenn es ein Wartungsfenster zu diesem Zeitpunkt auf Klasse 2 gesetzt ist. Über die Zeit werden die Dauer des aktiven Zustandes der Service Trouble Tickets TT1 kumuliert bzw. in einer mathematischen Betrachtung integriert. Dies ist in der oberen graphischen Darstellung gemäss der Figur 4 zu entnehmen. Wie bereits ausgeführt, hat in der mittleren Darstellung die Ordinate keinen Bedeutung im Sinne einer Metrik, dies zeigt lediglich den aktiven oder inaktiven Zustand von Trouble Tickets TT1 und TT2 an. Ein Beispiel eines Network Trouble Tickets TT2 aus der Klasse 2 ist zur Unterscheidung strichliiert und etwas kleiner dargestellt, wobei die Höhe hier unwesentlich ist. Wesentlich bei dieser Integration/Kumulation ist nun, dass in diesem Ausführungsbeispiel Network Trouble Tickets TT2 der Klasse 2 bei der Integration keinen Beitrag leisten. Die fortlaufende Integration der Service Trouble Tickets TT1 der Klasse 1 führt zu einem bestimmten Zeitpunkt zu einer Verletzung des zugesicherten SLA-Levels. Diese Verletzungsgrenze SLA_Viol ist in der Figur 4 mit einer Punkt-Strich-Linie dargestellt. Das Überschreiten 41 der Verletzungsgrenze SLA_Viol bewirkt die Notifikation zuhanden eines Kunden Cust.

Bei der vorerwähnten Filterung aus der Einheit Filt_Corr kann mit berücksichtigt werden, dass Ereignisse aus dem Fault Management abhängig von der Tageszeit zwar die Generierung eines Trouble Tickets, hier eines Network Trouble Tickets Netw_T zur Folge haben, dass jedoch ein solches Ticket zum vorneherein im inaktiven Zustand ist und daher nicht zu einem Service Trouble Ticket führt. Dies ist notwendig, um auftretende Ereignisse bzw. Trouble Tickets in einem gemäss einer SLA vereinbarten Wartungsfenster nicht für die Überwachung des SLA's berücksichtigt werden.

In der Darstellung der Figur 4 ist auch enthalten, dass ein und dasselbe Trouble Ticket TT1 , z.B. ein Service Trouble Ticket nach erfolgtem Setzen in den inaktiven Zustand wieder reaktiviert wird. Dies ist dann erforderlich, wenn eine bestimmte Dienstleistung oder ein bestimmter Dienst aus Gründen, die der Kunde zu verantworten hat, nicht erbracht werden kann; Beispiel: Bestimmte Zeiten sind vom Kunden explizit ausgeschlossen, innerhalb derer vom Dienstanbieter eine Arbeit ausgeführt werden kann wie Wochenende oder eine Hochbetriebszeit, während der keine Eingriffe gemacht werden dürfen. Solche Blockierungszeiten können dabei Teil eines SLA sein und sind in der Datenbasis DB1 und/oder DB2 enthalten.

Für die vorgenannte Klassierung zwischen Network Trouble Tickets und Service Trouble Tickets ist bei der Bildung der Objekt- und Servicetablle zu beachten, dass durchaus Network Trouble Tickets auftreten, die nicht servicerelevant sind, beispielsweise von Test-Routern oder von Stand-By-Ausrüstungen.

Die Darstellung gemäss der Figur 4 ist nur "einschichtig" in dem Sinne, als in einer bevorzugten Ausführungsform der vorliegenden Erfindung mehrere verschiedene solche Verletzungsgrenze SLA_Viol und/oder die Kumulation unabhängig über verschiedene Klassen von Trouble Tickets erfolgt. Mit beispielsweise drei geordneten Verletzungsgrenzen

$$SLA\_Viol1 < SLA\_Viol2 < SLA\_Viol3$$

lässt sich die SLA-Überwachung gegenüber einem Kunden wie folgt differenzieren:

SLA_Viol1     Für einen sehr niedrige Verletzungsgrenze erfolgt die Generierung eines Service Tickets zuhanden einer Person "Supervisor", damit proaktiv Massnahmen eingeleitet werden können;

SLA_Viol2     Ein Überschreiten dieses Levels wird benutzt, um eine Priorisierung zuhanden eines Reparaturzentrums ReP_C vorzunehmen, dies erfolgt über die Vorgänge 38 und 33 gemäss der Figur 3;

SLA_Viol3     Notifikation des Kunden.

Diese zusätzlichen Verletzungsgrenzen SLA_Viol2 und SLA_Viol3 können als sogenannte interne SLA's angesehen werden. Sie unterscheiden sich vom SLA, das gegenüber einem Kunden abgeschlossen wurde nur durch den Grenzwert und die Zieladresse der Notifikation. In einer anderen Sicht liegen diesem Beispiel gleichzeitig drei zu überwachende SLA's zugrunde, nämlich Kunden-SLA, internes SLA und ein sogenanntes Master SLA. Diese vorgenannten SLA's werden in der gleichen Weise bearbeitet und vorzugsweise parallel bearbeitet, sie unterscheiden sich lediglich in der Parametrierung, wie SLA-Verletzungsgrenzwert und Zieladressse für die Notifikation.

Die vorgenannte Klassierung beinhaltet, dass Trouble Tickets berücksichtigt werden oder nicht. In einer weiteren Ausführungsform der Erfindung kann das vorgeschlagene SLA-Monitoring für verschiedene Klassen separat durchgeführt werden. Abhängig von der betreffenden Klasse können bei Grenzwertüberschreitung Notifikation nur gemäss den vorstehenden Angaben zu SLA_Viol2 und SLA_Viol3 erfolgen ohne eine Notifikation des Kunden, wobei der Begriff Kunde hier im üblichen Sinne zu verstehen ist. Dies erlaubt ebenfalls eine differenziertere SLA-Überwachung bezüglich eines Gegenstand für einen Kunden, indem notwendige Massnahmen zu einem Zeitpunkt eingeleitet werden können, wo sich ein Problem gegenüber einem Kunden noch gar nicht manifestiert.

Die einzelnen Verfahrensschritte wie beispielsweise der Generierung der Trouble Tickets wie auch vorgängig der Nachführung der Datenbasis DB1, DB2 und des Vergleichs mit den Verletzungsgrenzen werden vorzugsweise in Echtzeitprozessen durchgeführt. Dabei können alle oder nur Teile der vorgenannten Verfahrensschritte in Echtzeitprozessen implementiert sein.

Das erläuterte Ausführungsbeispiel der vorliegenden Erfindung ist jedoch keineswegs auf Netze der Telekommunikation beschränkt, sondern kann für andere technische Objekte, die Gegenstand von SLA's sein können, ebenfalls anwendbar, beispielsweise auf dem Gebiet Energieversorgung oder Verkehrswege.

**Liste der verwendeten Bezugszeichen**

| | |
|---|---|
| 22 | Installation ausgeführt |
| 24 | Fehler behoben |
| 31 | Event Collection, Ereigniskollektion |
| 32 | Kreation eines objektbezogenen Problem Tickets |
| 33 | Initiierung eines Reparaturauftrages |
| 34 | Kreation eines servicebezogenen Problem Tickets |
| 35 | Prüfung von Trouble Tickets gegen SLA-Kriterien |
| 36 | Notifikation einer SLA-Verletzung |
| 37 | Erfassung, Zuführung von Kundenreklamationen |
| 38 | Priorisierung von Reparaturaufträgen |
| 39 | Objekt- und Service-Zuordnungstabelle |
| 41 | Verletzung eines SLA-Kriteriums |
| Bill | Billing, Verrechnung |
| CI | Client, Web Client |
| Cust | Kunde |
| CRM | Customer Relationsship Management |
| DB1, DB2 | Datenbasen |
| EAI | Generischer Bus, um auf Datenbanken verschiedener Technologien zuzugreifen zu können, sodass bestehende Datenbanken nicht dupliziert werden müssen. |
| EV, Ev1, Ev2 | Event, Ereignis |
| Fa_Ev | Fault Event |
| Filt_Corr | Ereignis-Filterung und -Korrelation |
| FM | Fault Management |
| Ln | Leitungsvermittelte Dienste, z.B. Sprache |
| man | Manuelle Erfassung von Kunden-Reklamationen |

| | |
|---|---|
| Meth_TT | Trouble Ticketing |
| Netw_T | objektbezogenes Trouble Ticket, Netzwerk Trouble Ticket, Network Trouble Ticket |
| NI | Network Interface; Schnittstelle zu Netzwerken |
| Not | Notifikation, Benachrichtung |
| Obj_Lev | Objekt Ebene, Object Level |
| oth_M | other Management, weitere Service Managements |
| PM | Performance Management |
| Perf_Ev | Performance Event |
| Prov_Ev | Provisioning Event |
| Rep_C | Reparatur-Zentrum, Field Service |
| S_Prov | Service Provisioning |
| S_Ass | Service Assurance |
| S_Act | Service Activation |
| Serv_Lev | Service Ebene, Service Level |
| Serv_T | Service Trouble Ticket |
| SLA_Acc | SLA Accounting |
| SLA_Moni | SLA Monitoring, SLA-Aufzeichnung, SLA-Verfolgung |
| SLA_Viol | SLA-Verletzungsgrenze, SLA-Grenzwert |
| t | Zeit |
| TT, TT1, TT2 | Trouble Ticket |
| UI | User Interface |

**Liste der verwendeten Abkürzungen**

| | |
|---|---|
| ATM | Asynchroner Transfer Modus |
| IP | Internet Protocol |
| SDH | Synchrone Digitale Hierarchie |
| SLA | Service Level Agreement |

**Literaturquelle**

[1] TeleManagement Forum office
1201 Mt. Kemble Avenue
Morristown, NJ 07960 USA

Tel: +1 973 425 1900
FAX: +1 973 425 1515
http://www.tmforum.org

**Patentansprüche**

1. Verfahren zur Überwachung von Service-Level-Agreements SLA mit den Verfahrensschritten:

   A Nachführung einer Datenbasis (DB1, DB2) mit SLA-bezogenen Daten;
   B Erfassung (31) und Speicherung von SLA-relevanten Ereignissen;
   C Vergleich der gespeicherten SLA-relevanten Ereignisse mit den in der Datenbasis (DB1, DB2) gespeicherten SLA-bezogenen Daten und allfällige Generierung eines Reports aus den Ergebnissen des Vergleichs;
   **dadurch gekennzeichnet, dass**
   D aus einem ersten gespeicherten SLA-relevanten Ereignis (EV, Ev1, Ev2) ein Trouble Ticket (TT1, Serv_T, Netw_T) generiert und abhängig vom Ereignis (Ev1, Ev2) in einen aktiven Zustand gesetzt wird;
   E durch ein weiteres Ereignis (Ev, Ev1) ein Trouble Ticket (TT1, Serv_T, Netw_T) in den inaktiven Zustand versetzt wird;
   C' im Verfahrensschritt C die Dauer des aktiven Zustandes der Trouble Tickets (TT1, Serv_T, Netw_T) kumuliert (SLA_Acc) und gegenüber wenigstens einer SLA-Verletzungsgrenze (SLA_Viol) verglichen wird;
   F bei Überschreiten (41) der vorgenannten Verletzungsgrenze (SLA_Viol) eine Notifikation (36) generiert wird.

2. Verfahren nach Anspruch 1,
   **dadurch gekennzeichnet, dass**
   im Verfahrensschritt D die Ereignisse (EV, Ev1) technischen (IP; SDH, ATM, Ln) und nichttechnischen (man) Ursprung haben.

3. Verfahren nach Anspruch 1 oder 2,
   **dadurch gekennzeichnet, dass**
   im Verfahrensschritt D die Ereignisse (EV, Ev1) vor der Generierung eines Trouble Tickets und dementsprechend auch die Trouble Tickets (TT1, TT2) klassifiziert werden und dass
   im Verfahrensschritt C' die Kumulation der Dauer abhängig von der Zugehörigkeit zu einer Klasse vorgenommen wird.

4. Verfahren nach einem der Ansprüche 1 bis 2,
   **dadurch gekennzeichnet, dass**
   im Verfahrensschritt D die Kumulation (SLA_Acc) der Dauer pro Klasse vorgenommen wird.

5. Verfahren nach einem der Ansprüche 1 bis 4,
   **dadurch gekennzeichnet, dass**
   dem Verfahrensschritt E nachfolgend ein im inaktiven Zustand befindliches Trouble Ticket (TT) durch ein Ereignis (Ev1, EV2) erneut in den aktiven Zustand überführt wird.

6. Verfahren nach Anspruch 5,
   **dadurch gekennzeichnet, dass**
   für die Überführung in einen inaktiven Zustand eines Trouble Tickets (TT1, TT2) Daten aus einer Zuordnungstabelle (39) herangezogen werden.

7. Verfahren nach Anspruch 5,
   **dadurch gekennzeichnet, dass**
   für die Überführung in einen inaktiven Zustand eines Trouble Tickets (TT1, TT2) Daten aus einer Zuordnungstabelle (39) und/oder aus der Datenbasis (DB1, DB2) herangezogen werden.

8. Verfahren nach einem der Ansprüche 3 bis 7,
   **dadurch gekennzeichnet, dass**
   mehrere SLA's parallel überwacht werden.

9. Verfahren nach Anspruch 8,

**dadurch gekennzeichnet, dass**
die mehreren SLA's je einen eigenen SLA-Grenzwert (SLA_VioL) aufweisen und die Notifikation an SLA-spezifische Zieladressen übermittelt wird.

10. Verfahren nach einem der Ansprüche 1 bis 9,
**dadurch gekennzeichnet, dass**
die Verfahrensschritte A bis E in Echtzeitprozessen durchgeführt werden.

11. System mit Mitteln zur Durchführung aller Schritte des Verfahrens gemäss einem der Ansprüche 1 bis 8.

**Claims**

1. Method for monitoring service level agreements SLA with the method steps:

   A Updating a database (DB1, DB2) with SLA-related data;
   B Capturing (31) and storing SLA-related events;
   C Comparing the stored SLA-related events with the SLA-related data stored in the database (DB1, DB2) and possible generation of a report from the results of the comparison,
   **characterised in that**
   D a trouble ticket (TT1, Serv_T, Netw_T) is generated from a first stored SLA-relevant event (EV, Ev1, Ev2) and switched to an active state as a function of the event (Ev1, Ev2);
   E a trouble ticket (TT1, Serv_T, Netw_T) is switched to the inactive state by a further event (Ev1, Ev2);
   C' the duration of the active state of the trouble ticket (TT1, Serv_T, Netw_T) is accumulated in the method step C and compared with at least one SLA violation limit (SLA_Viol);
   F if the above-mentioned violation limit (SLA_Viol) is exceeded, a notification is generated.

2. Method according to claim 1,
   **characterised in that**
   in the method step D the events (EV, Ev1) have a technical (IP; SDH, ATM, Ln) and non-technical (man) origin.

3. Method according to claim 1 or 2,
   **characterised in that**
   in the method step D the events (EV, Ev1) before the generation of a trouble ticket are classified and correspondingly also the trouble tickets (TT1, TT2) and in the method step C' the duration is accumulated as a function of association with a class.

4. Method according to one of claims 1 to 2,
   **characterised in that**
   in the method step D the duration is accumulated (SLA_Acc) per class.

5. Method according to one of claims 1 to 4,
   **characterised in that**
   after the method step E a trouble ticket (TT) in the inactive state is switched back to the active state by an event (Ev1, Ev2).

6. Method according to claim 5,
   **characterised in that**
   data from an assignment table (39) is used to switch a trouble ticket (TT1, TT2) to an inactive state.

7. Method according to claim 5,
   **characterised in that**
   data from an assignment table (39) and/or out of the database (DB1, DB2) is used to switch a trouble ticket (TT1, TT2) to an inactive state.

8. Method according to one of claims 3 to 7,
   **characterised in that**
   a number of SLAs are monitored in a parallel manner.

**9.** Method according to claim 8,
**characterised in that**
the number of SLAs each have their own SLA limit value (SLA_Viol) and the notification is transmitted to SLA-specific destination addresses.

**10.** Method according to one of claims 1 to 9,
**characterised in that**
the method steps A to E are carried out in real-time processes.

**11.** System with means for carrying out all the steps of the method according to one of claims 1 to 8.

**Revendications**

**1.** Procédé de surveillance d'accords de niveau de service SLA, comprenant les stades de procédé :

A suivi d'une base (CB1,DB2) de données ayant des données rapportées aux SLA ;
B détection (31) et mémorisation d'évènements pertinents pour les SLA ;
C comparaison des évènements mémorisés pertinents pour les SLA aux données rapportées aux SLA qui sont mémorisés dans la base (DB1, DB2) de données et production dans tous les cas d' un rapport à partir des résultats de la comparaison ;
**caractérisé en ce que**
D on produit à partir d'un premier évènement (EV, Ev1, Ev2) mémorisé pertinent pour les SLA un trouble ticket (TT1, Serv_T, Netw_T) et on le met dans un état actif en fonction de l'évènement (Ev1, Ev2) ;
E on met par un autre évènement (EV, Ev1) un trouble ticket (TT1, Serv_T, Netw_T) à l'état inactif ;
C' dans le stade C du procédé, on cumule (SLA_Acc) les durées de l'état actif des trouble tickets (TT1, Serv_T , Netw_T) et on les compare avec au moins l'une des limites (SLA_Viol) de violation des SLA ;
F si les limites (SLA_Viol) de violation mentionnées ci-dessus sont dépassées (41), on produit une notification (36).

**2.** Procédé suivant la revendication 1,
**caractérisé en ce que**
dans le stade D du procédé les évènements (EV , Ev1) ont une origine technique (IP ; SDH, ATM, Ln) et non technique (man) .

**3.** Procédé suivant la revendication 1 ou 2,
**caractérisé en ce que**
dans le stade D du procédé les évènements (EV, Ev1) sont classés avant la production d' un trouble ticket et les trouble tickets (TT1, TT2) sont classés aussi en conséquence et **en ce que** dans le stade C' du procédé on effectue l'accumulation des durées en fonction de l'appartenance à une classe .

**4.** Procédé suivant l'une des revendications 1 à 2,
**caractérisé en ce que**
l'on effectue au stade D du procédé la cumulation (SLA_Acc) des durées par classe .

**5.** Procédé suivant l'une des revendications 1 à 4,
**caractérisé en ce que**
à la suite du stade E du procédé, on remet un trouble ticket (TT) se trouvant à l'état inactif à nouveau à l'état actif par un évènement (Ev1, Ev2) .

**6.** Procédé suivant la revendication 5,
**caractérisé en ce que**
pour la remise en un état inactif d' un trouble ticket (TT1, TT2) on tire parti des données d'une table (39) d'affectation .

**7.** Procédé suivant la revendication 5,
**caractérisé en ce que**
pour la remise en un état inactif d' un trouble ticket (TT1, TT2), on tire parti des données d' une table (39) d' affectation et/ou de la base (DB1, DB2) de données .

**8.** Procédé suivant l'une des revendications 3 à 7,
**caractérisé en ce que**
l'on surveille plusieurs SLA en parallèle .

**9.** Procédé suivant la revendication 8,
**caractérisé en ce que**
les plusieurs SLA ont respectivement une valeur (SLA_VioL) limite du SLA qui leur est propre et on transmet la notification à des adresses de destinataire spécifiques au SLA

**10.** Procédé suivant l'une des revendications 1 à 9
**caractérisé en ce que**
l'on effectue les stades A à E du procédé en temps réel.

**11.** Système ayant des moyens pour la mise en oeuvre de tous les stades du procédé suivant l'une des revendications 1 à 8.

Fig. 1

EP 1 349 314 B1

Fa_ev

Fa_ev

TT2

TT1

24

Fig. 2b

Prov_Ev

Prov_Ev

22

TT

Fig. 2a

Perf_Ev

Perf_Ev

Fig. 2c

Fig. 3

EP 1 349 314 B1

Fig. 4

EP 1 349 314 B1